(19) **Europäisches Patentamt**

**European Patent Office**

**Office européen des brevets**

(11) **EP 0 982 365 A1**

(12) **EUROPEAN PATENT APPLICATION**
published in accordance with Art. 158(3) EPC

(43) Date of publication:
01.03.2000 Bulletin 2000/09

(51) Int. Cl.[7]: **C08L 63/00**, C08L 31/08,
C08F 2/22

(21) Application number: 98919501.1

(22) Date of filing: 07.05.1998

(86) International application number:
**PCT/JP98/02019**

(87) International publication number:
**WO 98/51744 (19.11.1998 Gazette 1998/46)**

(84) Designated Contracting States:
**DE**

(30) Priority: **12.05.1997 JP 12112497**

(71) Applicant: **Daiso Co., Ltd.**
**Osaka (JP)**

(72) Inventors:
• **TOMOI, Masao**
**Kanagawa 226-0003 (JP)**
• **IIJIMA, Takao**
**Kanagawa 240-0065 (JP)**

• **NAKAMURA, Seiji**
**Hyogo 661-0041 (JP)**
• **SHIMIZU, Yasumi**
**Hyogo 666-0013 (JP)**
• **AOKI, Koji**
**Hyogo 664-0864 (JP)**

(74) Representative:
**VOSSIUS & PARTNER**
**Siebertstrasse 4**
**81675 München (DE)**

(54) **EPOXY RESIN COMPOSITION**

(57) An epoxy resin composition containing (1) 100 parts by weight of an epoxy resin; and (2) 1 to 300 parts by weight of crosslinked copolymer fine particles containing (a) 10 to 90 % by weight of di(meth)allyl phthalate, and (b) 10 to 90 % by weight of a vinyl compound other than di(meth)allyl phthalate affords a cured material having high toughness such as fracture toughness and impact resistance, without impairing excellent characteristics of the epoxy resin such as mechanical strength.

**Description**

FIELD OF THE INVENTION

The present invention relates to a resin composition wherein the toughness of an epoxy resin useful in the fields of paints, coating agents, lining agents, adhesives, sealing agents and molded materials is improved.

RELATED ART

Generally, epoxy resins have widely been used in the fields of paints, coating agent, lining agents, adhesives, sealing agents and molded materials because of less cure shrinkage, excellent dimensional stability, high mechanical strength, excellent electrical characteristics as an insulating material, and excellent heat resistance, water resistance and chemical resistance.

However, epoxy resins have drawbacks such as hard and brittle properties because the elasticity modulus of the cured material is high and the energy absorption is low. When the epoxy resin is cured at high temperature, the adhesion force is lowered in the case of an adhesive and defects such as void and crack occur in the case of the molded material during the cooling after curing, or under an environment where the temperature is changed rapidly and widely. Accordingly, various studies on reduction of an internal stress have hitherto been made for the purpose of imparting strong toughness to the epoxy resin.

A principal procedure for improvement includes, for example, a modification by means of a low-molecular weight liquid rubber having a carboxyl group at the terminal. That is, a rubber molecule is fixed to the epoxy resin by a phase separation control while reacting with the terminal carboxyl group. According to this procedure, the internal stress is lowered and the toughness is improved, while the hardness as an inherent characteristic of the epoxy resin is lowered, resulting in lowering of the elasticity modulus. The reduction in internal stress and improvement in impact resistance are not sufficiently satisfactory. Furthermore, the rubber is inferior in heat resistance and weathering resistance because it has a double bond in the molecule. There was also a drawback that the construction of the process is considerably restricted because the molding process is attended with conditions of phase separation control.

In order to eliminate the drawbacks of the above procedures due to the low-molecular weight liquid rubber, a partially crosslinked rubbery copolymer prepared by partially crosslinking a rubber previously was provided, as disclosed in Japanese Patent Kokai Publication No. 117948/1990, thereby to improve the above problems to some extent (e.g. balance between toughness and elasticity modulus, and relaxation of restriction with regard to the process). However, there was a limit in application to various epoxy resins such as epoxy resin having high crosslink density and high glass transition temperature. The above partially crosslinked rubbery copolymer had unfavorable properties on practical use, such as poor heat resistance and weathering resistance due to a double bond. Furthermore, a large amount of a blocking inhibitor must be mixed on practical handling as powder because of its intrinsically rubbery property.

SUMMARY OF THE INVENTION

In view of the above problems on improvement in toughness of the epoxy resin, an object of the present invention is to provide a novel epoxy resin composition wherein the toughness is markedly improved with preventing the elasticity modulus from substantially lowering, the restriction of the phase separation condition such as mixing of a low-molecular weight liquid rubber is hardly imposed and, furthermore, a problem such as blocking is markedly solved even in the case that the compounding agent is treated as powder.

The present inventors have studied intensively. As a result, we found surprisingly that the above object is attained by an epoxy resin containing, as a compounding agent, rigid fine particles having high crosslink density and high glass transition temperature, other than the above partially crosslinked rubber or rubber having low crosslink density, thus completing the present invention.

The present invention provides an epoxy resin composition comprising:

(1) 100 parts by weight of an epoxy resin; and
(2) 1 to 300 parts by weight of crosslinked copolymer fine particles comprising

(a) 10 to 90 % by weight of di(meth)allyl phthalate, and
(b) 10 to 90 % by weight of a vinyl compound other than di(meth)allyl phthalate.

DETAILED DESCRIPTION OF THE INVENTION

The epoxy resin (1) used in the present invention is, for example, an epoxy group-containing compound. The epoxy group-containing compound includes, for example, a condensation product of epichlorohydrin and polyhydric alcohol or polyhydric phenol, a condensation product of epichlorohydrin and phenol novolak, a cyclic aliphatic epoxy compound, a glycidyl ester epoxy compound, a heterocyclic epoxy compound, an epoxy compound derived from polymer or copolymer of polyolefin, an epoxy compound obtained by (co)polymerization of glycidyl methacrylate, an epoxy compound obtained from glyceride of highly unsaturated fatty acid, a polyalkylene ether type epoxy compound (including nuclear polyol type epoxy resin and polyurethane skeleton-containing epoxy compound) and a compound having epoxy equivalent of not more than 6000, such as bromine- or fluorine-containing epoxy compound. These epoxy resins can be properly used in combination.

The epoxy resin (1) of the present invention may contain a curing agent and/or a curing accelerator. The curing agent and/or curing accelerator can be selected according to the curing type of the optionally modified epoxy composition, e.g. two-pack type, one-pack type, thermocurable type and photocurable type, and include various ones. As the curing agent and/or curing accelerator, for example, there can be used an aliphatic polyamine such as ethylenediamine, diethylenetriamine, triethylenetetramine, tetraethylenepentamine, dipropylenediamine, diethylaminopropylamine, hexametyhylenediamine, menthenediamine, bis(4-amino-3-methyldicyclohexyl)-methane, diaminodicyclohexylmethane, bis(aminomethyl)cyclohexane, N-aminoethylpiperazine, 3,9-bis(3-aminopropyl)2,4,8,10-tetraoxaspiro(5,5)-undecane and m-xylylenediamine; a secondary or tertiary amine, such as methaphenylenediamine, diaminodiphenylsulfone, diaminodiethyldiphenylmethane, 2-(dimethylaminomethyl)-phenol, 2,4,6-tris(dimethylaminomethyl)phenol, tetramethylguanidine, 1,8-diazabicyclo(5,4,0)undecene, triethanolamine, piperidine, pyrrolidine, polyamideamine and boron fluoride monoethylamine; an acid anhydride such as methylnadic anhydride, dodecenylsuccinic anhydride, tetrahydrophthalic anhydride, hexahydrophthalic anhydride, methylendomethylenetetrahydrophthalic anhydride, methylendomethylenetetrahydrophthalic anhydride, chlorendic acid anhydride, ethylene glycol trimellitate anhydride, methyltetrahydrophthalic anhydride and methylhexahydrophthalic anhydride; an imidazole derivative such as imidazole, 2-methylimidazole, 2-ethyl-4-methylimidazole, 2-phenylimidazole, 2-undecylimidazole, 2-heptadecylimidazole, 1-benzyl-2-methylimidazole, 1-cyanoethyl-2-methylimidazole, 1-cyanoethyl-2-phenylimidazole, 1-cyanoethyl-2-ethyl-4-methylimidazole, 1-cyanoethyl-2-undecylimidazole, 1-cyanoethyl-2-methylimidazole trimellitate, 1-cyanoethyl-2-phenylimidazole trimellitate, 2,4-diaminio-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4'-methylimidazolyl)-(1'))-ethyl-s-triazine, 1-cyanoethyl-2-ethyl-4-methylimidazole trimellitate, 1-cyanoethyl-2-undecylimidazole trimellitate, 1-dodecyl-2-methyl-3-benzoimidazolium chloride and 1,3-dibenzyl-2-methylimidazolium chloride; a dicyandiamide or derivative thereof; an organic acid dihydrazide such as dihydrazide adipate; a urea derivative such as 3-(p-chlorophenyl)-1,1-dimethylurea; a methylol group-containing compound such as a polymercaptane curing agent, a phenol resin, a urea resin and a melamine resin; a polyisocyanate; and an aromatic diazonium salt or sulfonium salt, as an ultraviolet curable catalyst. These compounds may be used properly in combination.

When using the curing agent and/or curing accelerator, the amount thereof is not specifically limited but is preferably selected within a range from 0.2 to 2 equivalents per one equivalent of the epoxy group of the epoxy group-containing compound in the epoxy resin (1). The amount of an active hydrogen group contained in the curing agent and/or curing accelerator is preferably selected within a range from 0.8 to 1.2 equivalents per one equivalent of the epoxy group of the epoxy group-containing compound.

Di(meth)allyl phthalate (a) in the crosslinked copolymer fine particles (2) means diallyl phthalate and dimethallyl phthalate. Di(meth)allyl phthalate (a) may be one or at least two monomers selected from diallyl orthophthalate, diallyl metaphthalate, diallyl terephthalate, dimethallyl orthophthalate, dimethallyl metaphthalate and dimethallyl terephthalate, and one or more kinds of them may be also used in combination. Among them, diallyl orthophthalate, diallyl metaphthalate and diallyl terephthalate are particularly preferred.

The amount of the di(meth)allyl phthalate (a) is from 10 to 90 % by weight, preferably from 15 to 80 % by weight, more preferably from 20 to 80 % by weight, based on the whole monomer in the crosslinked copolymer fine particles (2). When the amount of the di(meth)allyl phthalate (a) is smaller than 10 % by weight, the crosslink density is insufficient. Therefore, not only the glass transition temperature is lowered to form tackiness, thereby making it difficult to practically handle as powder, but also the dispersion property on mixing is lowered so that the mechanical strength of the cured material is lowered. On the other hand, when the amount of the di(meth)allyl phthalate exceeds 90 % by weight, the polymerization reaction on production of fine particles becomes very slow so that a large amount of an initiator is required, which is not suited for practical use.

The vinyl compound (b) may be

(b-1) a compound containing a functional group having reactivity with an epoxy group, and/or

(b-2) a compound containing no functional group having reactivity with an epoxy group.

The functional group having reactivity with the epoxy group in the compound (b-1) containing the functional group having reactivity with the epoxy group may be at least one group selected from an acid group, an acid anhydride group, a group of salt of acid, a hydroxyl group, an epoxy group and an amino group.

The vinyl compound (b-1) containing the functional group having reactivity with the epoxy group includes:

(b-1-i) a vinyl compound having an acid group and acid anhydride or salt of said vinyl compound,
(b-1-ii) a vinyl compound having a hydroxyl group,
(b-1-iii) a compound having an epoxy group, and
(b-1-iv) a vinyl compound having an amino group.

The vinyl compound having an acid group and acid anhydride or salt of the vinyl compound (b-1-i) include an unsaturated carboxylic acid such as acrylic acid, methacrylic acid, itaconic acid and maleic acid; mono(meth)allyl phthalate, mono(meth)allyl maleate, mono(meth)allyl fumarate or acid anhydride or salt thereof; an unsaturated sulfonic acid such as styrenesulfonic acid and 2-acrylamido-2-methylpropanesulfonic acid or salt thereof; and a vinyl compound having a carboxyl, sulfonic or phosphoric group, such as vinylsulfonic acid and acid phosphoxylethyl (meth)acrylate, and acid anhydride or salt of said vinyl compound.

The vinyl compound having a hydroxyl group (b-1-ii) includes vinyl compounds having a hydroxyl group, such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, (meth)allyl alcohol, (meth)allyl lactate, (meth)acrylic acid monoester of glycerin, (meth)acrylic acid monoester of pentaerythritol, allyl alcohol and methacryl alcohol. Among them, 2-hydroxyethyl (meth)acrylate is particularly preferred.

The compound having an epoxy group (b-1-iii) includes vinyl compounds wherein all vinyl groups other than at least one vinyl group in the molecule of aromatic conjugated vinyl compound are epoxidized, such as divinylbenzene monoepoxide and diisopropenylbenzene monoepoxide; vinyl compounds wherein all vinyl groups other than at least one vinyl group in the molecule of aliphatic vinyl compound having a plurality of unsaturated bonds are epoxidized, such as butadiene, isoprene monoepoxide, 1,5-hexadiene monoepoxide and vinylcyclohexene monoepoxide; vinyl compounds wherein all vinyl groups other than at least one vinyl group in the molecule of vinyl compound having a plurality of the same or different allyl ether groups or methallyl ether groups are epoxidized, such as (meth)allyl glycidyl ether, 2-methylglycidyl (meth)allyl ether, ethylene glycol di(meth)allyl ether monoepoxide, propylene glycol di(meth)allyl ether monoepoxide, hexanediol di(meth)allyl ether monoepoxide, trimethylolpropane di(meth)allyl ether monoepoxide, pentaerythritol tri(meth)allyl ether monoepoxide, dimethylolcyclohexane di(meth)allyl ether monoepoxide, tri(meth)allyl isocyanurate monoepoxide and tri(meth)allyl isocyanurate diepoxide; vinyl compounds wherein all vinyl groups other than at least one vinyl group in the molecule of vinyl compound having a plurality of the same or different allyl ester groups or methallyl ester groups are epoxidized, such as di(meth)allyl carbonate monoepoxide, di(meth)allyl monoepoxide oxalate, di(meth)allyl monoepoxide succinate, di(meth)allyl monoepoxide fumarate, di(meth)allyl monoepoxide maleate, di(meth)allyl monoepoxide adipate, di(meth)allyl monoepoxide cyclohexanedicarboxylate and di(meth)allyl monoepoxide phthalate; and (meth)acrylate esters having an epoxy group, such as glycidyl (meth)acrylate and methaglycidyl (meth)acrylate.

The vinyl compound having an amino group (b-1-iv) includes (meth)acrylate esters having an amino group, such as aminoethyl (meth)acrylate, N,N-dimethylaminoethyl (meth)acrylate, N,N-dimethylaminoethyl (meth)acrylate, N,N-diethylaminoethyl (meth)acrylate and N,N-dimethylaminopropyl (meth)acrylate; and compounds having an amino group and the same or different (meth)allyl group, such as (meth)allylamine, di(meth)allylamine, methyldi(meth)allylamine, tri(meth)allylamine and dimethyldi(meth)allylammonium chloride.

In addition to the components (b-1-i) to (b-1-iv), examples of the vinyl compound containing a functional group having reactivity with an epoxy group (b-1) include:

(meth)acrylic acid amides which may have a N-alkyl-substituted group, such as (meth)acrylic acid amide and N-methyl(meth)acrylic acid amide; (meth)acrylic acid amides substituted with an N-methylol or N-(O-alkylmethylol) group, such as N-methylol(meth)acrylic acid amide, N-(O-methylmethylol)(meth)acrylic acid amide, N-(O-butylmethylol)(meth)acrylic acid amide, N,N-di(O-methylmethylol)(meth)acrylic acid amide and N,N-di(O-butylmethylol)(meth)acrylic acid amide; vinyl compounds having a carbonyl group, such as methyl vinyl ketone and ethyl vinyl ketone; vinyl compounds having an aldehyde group, such as (meth)acrolein and crotonaldehyde; vinyl compounds wherein two carbonyl groups are bonded with the same methylene or methine group, such as acetacetoxyethyl (meth)acrylate; and vinyl compounds having an alkoxysilyl group, such as vinyltrimethoxysilane and (meth)acryloxypropyltrimethoxysilane.

The vinyl compound containing no functional group having reactivity with an epoxy group (b-2) includes (meth)acrylate ester, styrenes, α-methylstyrenes, (meth)allyl ethers, (meth)allyl esters, vinyl compounds having a cyano group, aliphatic hydrocarbons having an unsaturated bond, vinyl ethers, vinyl esters, maleate esters, fumarate esters, vinylsilanes, (meth)allyl alcohol, tri(meth)allyl cyanurate and tri(meth)allyl isocyanurate.

The above (meth)acrylate ester includes a (meth)acrylate ester of alcohol having 1 to 8 carbon atoms.

The acrylate ester includes acrylate esters of saturated aliphatic alcohol having 1 to 8 carbon atoms, such as methyl acrylate, ethyl acrylate, n-propyl acrylate, isopropyl acrylate, n-butyl acrylate, iso-butyl acrylate, t-butyl acrylate, pentyl acrylate, cyclopentyl acrylate, hexyl acrylate, cyclohexyl acrylate, heptyl acrylate, methylcyclohexyl acrylate, octyl acrylate and 2-ethylhexyl acrylate.

The methacrylate ester includes methacrylate esters of saturated aliphatic alcohol having 1 to 8 carbon atoms, such as methyl methacrylate, ethyl methacrylate, n-propyl methacrylate, iso-propyl methacrylate, n-butyl methacrylate, iso-butyl methacrylate, t-butyl methacrylate, pentyl methacrylate, cyclopentyl methacrylate, hexyl methacrylate, cyclohexyl methacrylate, heptyl methacrylate, methylcyclohexyl methacrylate, octyl methacrylate and 2-ethylhexyl methacrylate.

The (meth)acrylate ester further includes (meth)acrylate esters of alcohol of aliphatic hydrocarbon, such as 2-ethylhexyl (meth)acrylate; (meth)acrylate esters having an aromatic group, such as benzyl (meth)acrylate; acrylate esters or methacrylate esters of a halogenated alcohol, such as 2-chloroethyl (meth)acrylate, trifluoroethyl (meth)acrylate, perfluoroalkyl (meth)acrylate, and (meth)acrylate of perfluoroalcohol substituted with hydrogen only at the 1-position; esters having the same or different acrylic or methacrylic groups in the molecule, such as ethylene glycol di(meth)acrylate, diethylene glycol di(meth)acrylate, propylene glycol di(meth)acrylate, dipropylene glycol di(meth)acrylate, butanediol di(meth)acrylate, hexanediol di(meth)acrylate, glycerin tri(meth)acrylate, trimethylolpropane tri(meth)acrylate, pentaerythritol tetra(meth)acrylate, dipentaerythritol hexa(meth)acrylate, triazine tri(meth)acrylate and phosphazene tri(meth)acrylate; and (meth)acrylate esters having a (meth)acrylic group, such as allyl (meth)acrylate and methallyl (meth)acrylate.

The styrenes include styrene or styrenes in which the aromatic ring is substituted with a halogen, an alkyl group, a halogenated alkyl group or a vinyl group, such as ortho- or para-chlorostyrene, ortho- or para-methylstyrene, ortho- or parachloromethylstyrene, divinylbenzene and trivinylbenzene.

The $\alpha$-methylstyrenes include $\alpha$-methylstyrene or $\alpha$-methylstyrenes in which the aromatic ring is substituted with a halogen, an alkyl group, a halogenated alkyl group or a vinyl group, such as para-chloro $\alpha$-methylstyrene, ortho- or parachloromethyl $\alpha$-methylstyrene and diisopropenylbenzene.

The (meth)allyl ethers include vinyl compounds having a plurality of the same or different allyl or methallyl ether groups in a molecule, such as methyl(meth)allyl ether, ethyl(meth)allyl ether, propyl(meth)allyl ether, butyl(meth)allyl ether, hexyl(meth)allylether, cyclohexyl(meth)allyl ether, 2-ethylhexyl(meth)allylether, phenyl(meth)allyl ether, cresyl(meth)allyl ether, di(meth)allyl ether and allyl(meth)allyl ether; and vinyl compounds having a plurality of allyl ether groups or methallyl ethers in a molecule, such as ethylene glycol di(meth)allyl ether, propylene glycol di(meth)allyl ether, hexanediol di(meth)allyl ether, trimethylolpropane di(meth)allylether, pentaerythritol tri(meth)allyl ether, dimethylolcyclohexane di(meth)allyl ether and di(meth)allyl ether.

The (meth)allyl esters include allyl esters or methallyl esters, such as (meth)allyl acetate, (meth)allyl propionate, (meth)allyl butyrate, (meth)allyl benzonate and (meth)allyl lactate; and vinyl compounds having a plurality of the same or different allyl ester groups or methallyl ester groups in a molecule, such as di(meth)allyl carbonate, di(meth)allyl oxalate, di(meth)allyl succinate, di(meth)allyl fumarate, di(meth)allyl maleate, di(meth)allyl adipate and di(meth)allyl cyclohexanedicarboxylate.

The vinyl compounds having a cyano group include (meth)acrylonitrile.

The aliphatic hydrocarbons having unsaturated bond include vinyl compounds for example, aliphatic hydrocarbons having one unsaturated bond in a molecule, such as propylene, butene, pentene, hexene and cyclohexene; and aliphatic hydrocarbons having a plurality of unsaturated bonds in a molecule, such as butadiene, isoprene, 1,5-hexadiene and vinyl cyclohexene.

The vinyl ethers include methyl vinyl ether, ethyl vinyl ether, isopropyl vinyl ether, n-amyl vinyl ether, isoaminovinyl ether, (meth)allyl vinyl ether and divinyl ether.

The vinyl ester includes vinyl acetate, vinyl propionate, a long-chain vinyl carboxylate (Veoba 10 and Veoba 9 (trade names) manufactured by Shell Japan Co.).

The maleate ester includes maleate ester of a saturated or unsaturated aliphatic alcohol, such as dimethyl maleate, diethyl maleate, dibutyl maleate and di(meth)allyl maleate.

The fumarate ester includes fumarate ester of a saturated aliphatic alcohol, such as dimethyl fumarate, diethyl fumarate and dibutyl fumarate.

The vinylsilanes include silanes substituted with a saturated or unsaturated aliphatic hydrocarbon group, such as trimethylvinylsilane, dimethyldivinylsilane, diethyldivinylsilane, trimethyl(meth)allylsilane, dimethyldi(meth)allylsilane and tetra(meth)allylsilane.

Among the above, the (meth)acrylate esters of an alcohol having 1 to 8 carbon atoms are preferred as the vinyl compound (b-2). Among the acrylate esters, the esters of saturated aliphatic alcohol having 1 to 8 carbon atoms, such as methyl acrylate, ethyl acrylate, n-propyl acrylate, isopropyl acrylate, n-butyl acrylate, isobutyl acrylate, t-butyl acrylate, pentyl acrylate, cyclopentyl acrylate, hexyl acrylate, cyclohexyl acrylate, heptyl acrylate, methylcyclohexyl acrylate, octyl acrylate and 2-ethylhexyl acrylate are preferable. Among the methacrylate esters, methyl methacrylate, ethyl methacrylate, n-propyl methacrylate, isopropyl methacrylate, n-butyl methacrylate, isobutyl methacrylate, t-butyl methacrylate, pentyl methacrylate, cyclopentyl methacrylate, hexyl methacrylate, cyclohexyl methacrylate, heptyl methacrylate, methylcyclohexyl methacrylate, octyl methacrylate and 2-ethylhexyl methacrylate.

Methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate and 2-ethylhexyl (meth)acrylate are more preferable.

The amount of the vinyl compound (b) is within a range from 10 to 90 % by weight, preferably from 20 to 85 % by weight, more preferably from 20 to 80 % by weight, based on all monomers of the crosslinked copolymer fine particles (2). When the amount of the vinyl compound (b) exceeds 90 % by weight, the crosslink density is insufficient. Therefore, not only the glass transition temperature is lowered to have tackiness, thereby making it difficult to practically handle as powder, but also the dispersion property on mixing is lowered and the mechanical strength of the cured material is lowered. On the other hand, when the amount of the vinyl compound (b) is smaller than 10 % by weight, the polymerization reaction on production of fine particles becomes very slow and a large amount of an initiator is required, which is not suited for practical use.

The amount of the functional group-containing vinyl compound (b-1) in the crosslinked copolymer fine particles (2) is not limited, and may be usually within a range from 0.1 to 10 % by weight, preferably from 0.1 to 5 % by weight, more preferably from 0.1 to 3 % by weight. In the case that a portion of the functional groups of the functional group-containing vinyl compound (b-1) is localized inside the crosslinked copolymer fine particles, more than 10 % by weight of the functional group-containing vinyl compound (b-1) is required sometimes so that the residual functional groups are localized on the surface of the crosslinked copolymer fine particles in the amount of the above range. In that case, the amount is preferably at most 40 % by weight. The amount of the functional groups in the functional group-containing vinyl compound (b-1), which are localized on the surface, can be measured by titration of the fine particles (2).

The particle diameter of the crosslinked copolymer fine particles (2) is within a range from 0.01 to 50 μm, preferably from 0.02 to 10 μm, more preferably from 0.02 to 1 μm, particularly preferably from 0.02 to 0.8 μm, most preferably from 0.02 to 0.5 μm, in view of ease of producing the fine particles, dispersibility into the epoxy resin, and exhibition of effect of improving the toughness and impact resistance. The crosslinked copolymer fine particles (2) may be crosslinked copolymer particles (primary particles) in the emulsion produced by emulsion polymerization. The crosslinked copolymer fine particles (2) may be also particles (secondary particles) formed by agglomeration of particles in the emulsion. When the crosslinked copolymer fine particles are mixed with the epoxy resin (1) after converting into powders, the crosslinked copolymer fine particles may be mixed under the state of secondary particles integrated by agglomeration, or primary particles constituting the secondary particles.

The crosslinked copolymer fine particles can be prepared, for example, in accordance with WO 97/04016 invented by the present inventors or in accordance with emulsion polymerization in the same manner as in WO 97/04016. The crosslinked copolymer fine particles can be also prepared by, for example, dispersion polymerization or suspension polymerization.

The case, that the components and composition are converted by subjecting the reaction system to a separate chemical reaction after the completion of the copolymerization reaction of the crosslinked copolymer fine particles obtained directly by the copolymerizing reaction, or crosslinked copolymer fine particles separated from the reaction medium, are included within a scope of the present invention, as far as the components and composition range of the finally obtained crosslinked copolymer fine particles are within the scope of the present invention.

The method of mixing the crosslinked copolymer fine particles (2) with the resin (1) includes, for example, a method of performing the copolymerization reaction and removing water by distillation or phase separation, after or during transferring the crosslinked copolymer fine particles (2) containing the reaction medium to the resin (1) by sufficient contact of them using a means such as stirring, in the case of the aqueous emulsion obtained by the above-described emulsion polymerization.

It is also possible to mix powders, which are obtained by separating the fine particles containing the reaction medium, obtained by the crosslinking copolymerization reaction, using a means such as freeze-drying, salting-out, spray-drier and vacuum-drying, with the resin (1). On mixing, there can be used methods utilized for a conventional resin blend, such as roll kneading, homomixer, disper, sand mill, beads mill, homogenizer and ultrasonic wave irradiation. The epoxy resin composition can be also obtained by adding, to the resin (1), a liquid, which is prepared by previously dispersing the crosslinked copolymer fine particles in a solvent, sufficiently dispersing the fine particles and then optionally distilling the solvent.

The epoxy resin composition can be also obtained by previously mixing the fine particles of the present invention with a crosslinking agent for epoxy resin and then mixing the resulting mixture with the epoxy resin.

In the present invention, the amount of the crosslinked copolymer fine particles (2) is within a range from 1 to 300 parts by weight, preferably from 1 to 200 parts by weight, more preferably from 1 to 100 parts by weight, particularly preferably from 1 to 50 parts by weight, based on 100 parts by weight of the resin (1).

The epoxy resin composition may be also obtained finally by previously mixing the crosslinked copolymer fine particles (2) with one or more components constituting the resin (1), dispersing the fine particles, and combining the resulting mixture with the remaining components of the resin (1).

The epoxy resin composition may also contain various additives such as known fillers, reactive diluents, rust preventives, dyes/pigments and age resistors, according to purposes.

The resin composition of the present invention can be also used as a varnish after optionally dissolving in an organic solvent. The organic solvent includes, for example, a ketone solvent such as acetone, methyl ethyl ketone, methyl isobutyl ketone and cyclohexanone; an aliphatic alcohol solvent such as methanol, ethanol, isopropanol, butanol, isobutanol and diacetone alcohol; a cellosolve solvent such as methylcellosolve, ethylcellosolve, methylcellosolve acetate, ethylcellosolve acetate, butylcellosolve and butylcellosolve acetate; a carbitol solvent such as methylcarbitol, ethylcarbitol and butylcarbitol; an ester solvent such as methyl acetate, ethyl acetate and butyl acetate; an aromatic hydrocarbon solvent such as benzene, toluene and xylene; an aliphatic hydrocarbon solvent such as pentane and hexane; a halogen-containing hydrocarbon compound solvent such as 1,2-dichloroethane and chlorobenzene; a nitrile solvent such as acetonitrile and propionitrile; and an ether solvent such as dibutyl ether, tetrahydrofuran and 1,4-dioxane.

The above organic solvent includes also a solvent having reactivity, i.e. a reactive diluent. The reactive diluent includes, for example, saturated or unsaturated aliphatic (meth)glycidyl ethers, such as butyl (meth)glycidyl ether, (meth)allyl glycidyl ether and 2-ethylhexyl (meth)glycidyl ether; (meth)glycidyl ethers containing an aromatic ring, such as phenyl (meth)glycidyl ether, cresyl (meth)glycidyl ether and p-sec-butyl (meth)glycidyl ether; (meth)glycidyl esters and di(meth)glycidyl ethers, such as (meth)glycidyl (meth)acrylate and (meth)glycidyl tert-carboxylate (Cardular E); di(meth)glycidyl ethers of polyalkylene glycol, such as polyethylene glycol di(meth)glycidyl ether and polypropylene glycol di(meth)glycidyl ether; di(meth)glycidyl ethers of alkanediol, such as ethanediol di(meth)glycidyl ether, 1,2-propanediol di(meth)glycidyl ether, 1,3-propanediol di(meth)glycidyl ether and 1,4-butanediol di(meth)glycidyl ether; poly(meth)glycidyl ethers of polyol having at least two hydroxyl groups, such as trimethylolpropane tri(meth)glycidyl ether, pentaerythritol tetra(meth)glycidyl ether and glycerin tri(meth)glycidyl ether; vinylbenzene oxides such as styrene oxide and $\alpha$-methylstyrene oxide; and diglycidyl aniline. The (meth)glycidyl means glycidyl or 2-methylglycidyl, and may be the same or different. The above organic solvents can be used alone or in combination. Furthermore, an insoluble component such as water may be also added, for example, in the case that vaporization of the organic solvent must be controlled.

The composition of the present invention may be a cured material. The curing of the epoxy resin which contains a curing agent or an auxiliary curing agent for epoxy resin varies depending on the kind and amount of the curing agent and curing accelerator, but varies generally depending on a cold curing or heat curing type. In the case of the cold curing type, the curing may be conducted at a temperature within a range from -10 to 60°C over 1 minute to several months. In the case of the heat curing type, the curing may be conducted at a temperature within a range from 30 to 250°C over 5 minutes to several days. It is difficult to distinguish the above curing types and a practical service time varied depending on the kind of the type and, therefore, the proper time and temperature are designed depending on the use form.

The composition of the present invention can be used as paints, coating agents, lining agents, adhesives, sealing agents and molded materials.

PREFERRED EMBODIMENTS OF THE INVENTION

The following Examples further illustrate the present invention. In the Examples, percentages are by weight unless otherwise specified. The respective measurements are performed by the following procedures.

Polymerization degree

The weight of a residual monomer [e.g. diallyl terephthalate (DAT), butyl acrylate (BA), diallyl phthalate (DAP) and ethyl acrylate (EA)] was measured by gas chromatography (column: CBP-1), and then the polymerization degree was determined by the following calculation equation:

$$\text{Polymerization degree (\%)} = [(\text{Weight of monomer charged}) - (\text{Weight of unreacted monomer})] \times 100/(\text{Weight of monomer charged}).$$

Average particle diameter

The average particle diameter was measured by using a laser particle diameter analyzing system PHOTON CORRELATOR LPA-3000 (manufactured by Otsuka Denshi Co., Ltd.).

Acid value

The acid value was determined by dissolving an emulsion in a mixed solvent of ethanol, toluene and acetone and then titrating with a 0.1N-KOH-EtOH solution in the presence of a phenolphthalein solution as a indicator.

The preparation of a diallyl emulsion is illustrated in Reference Examples.

Reference Example 1

The following materials were charged in a 1 liter separable flask equipped with a stirrer, a thermometer, a condenser, a gas introducing port and a sampling port to prepare an aqueous emulsifier solution.

| | |
|---|---|
| Sodium dodecylbenzenesulfonate (manufactured by Daiichi Kogyo Seiyaku Co., Ltd., trade name: "Neogen R") | 7.2 g |
| Deionized water | 430 g |

Separately, a monomer mixture having the following composition was prepared.

| | |
|---|---|
| Diallyl terephthalate (DAT) | 36 g (10 % monomer) |
| Butyl acrylate (BA) | 319 g (88.5 % monomer) |
| Acrylic acid (AA) | 5.4 g (1.5 % monomer) |

The internal temperature of the flask was elevated to 80°C and the atmosphere was sufficiently substituted with nitrogen under stirring at 300 rpm using a semicircular stirring blade. Then, 10 % of the prepared monomer mixture was charged and an aqueous solution prepared by dissolving 0.54 g of ammonium persulfate in 10 g of deionized water was added, followed by the reaction for 1 hour and further successive addition of the remaining monomer mixture over about 3 hours. The polymerization was carried out at 80°C for 9 hours after the addition of a catalyst and the reaction mixture was neutralized with diluted aqueous ammonia. The resulting emulsion had a solid content of 45 %, a polymerization degree of 89.2 % for DAP and 100 % for BA, and an average particle diameter of 0.125 $\mu$m.

Reference Example 2

The following materials were charged in a 1 liter separable flask equipped with a stirrer, a thermometer, a condenser, a gas introducing port and a sampling port to prepare an aqueous emulsifier solution.

| | |
|---|---|
| Sodium dodecylbenzenesulfonate | 4.8 g |
| Deionized water | 550 g |

Separately, a monomer mixture having the following composition was prepared.

| | |
|---|---|
| Diallyl phthalate (DAP) | 36 g (15 % monomer) |
| Acrylic acid (AA) | 6 g (2.5 % monomer) |
| Ethyl acrylate (EA) | 198 g (82.5 % monomer) |

The internal temperature of the flask was elevated to 70°C and the atmosphere was sufficiently substituted with nitrogen under stirring at 300 rpm using a semicircular stirring blade. Then, 10 % of the monomer mixture was charged and an aqueous solution prepared by dissolving 1.2 g of ammonium persulfate in 10 g of deionized water was added, followed by the reaction for 1 hour and further successive addition of the remaining monomer mixture over 4 hours. The polymerization was carried out at 70°C for 9 hours after the addition of a catalyst and the reaction mixture was neutralized with diluted aqueous ammonia. The resulting emulsion had a solid content of 30 %, a polymerization degree of 94.2 % for DAP and 100 % for EA, and an average particle diameter of 0.102 μm.

Reference Example 3

The following materials were charged in a 1 liter separable flask equipped with a stirrer, a thermometer, a condenser, a gas introducing port and a sampling port to prepare an aqueous emulsifier solution.

| Sodium dodecylbenzenesulfonate | 1.9 g |
|---|---|
| Deionized water | 310 g |

Separately, an emulsified monomer having the following composition was prepared.

| DAP | 64 g (20% monomer) |
|---|---|
| AA | 248 g (77.5 % monomer) |
| EA | 8 g (2.5 % monomer) |
| Sodium dodecylbenzenesulfonate | 4.5 g |
| Deionized water | 160 g |

The internal temperature of the flask was elevated to 70°C and the atmosphere was sufficiently substituted with nitrogen under stirring at 300 rpm using a semicircular stirring blade. Then, 10 % of the prepared emulsified monomer was charged and an aqueous solution prepared by dissolving 1.12 g of ammonium persulfate in 10 g of deionized water was added, followed by the reaction for 1 hour and further successive addition of the remaining emulsified monomer over 4 hours. The polymerization was carried out at 70°C for 9 hours after the addition of a catalyst and the reaction mixture was neutralized with diluted aqueous ammonia. The resulting emulsion had a solid content of 40 %, a polymerization degree of 98.6 % for DAP and 100 % for EA, and an average particle diameter of 0.113 μm.

Reference Example 4

The following materials were charged in a 1 liter separable flask equipped with a stirrer, a thermometer, a condenser, a gas introducing port and a sampling port to prepare an aqueous emulsifier solution.

| Sodium dodecylbenzenesulfonate | 9.6 g |
|---|---|
| Deionized water | 470 g |

320 g of the above aqueous emulsifier solution was charged in another flask, and then mixed with the following monomers to prepare an emulsified monomer.

| DAP | 80 g (25 % monomer) |
|---|---|
| EA | 237 g (74 % monomer) |

(continued)

| AA | 3.2 g (1% monomer) |
|----|--------------------|

The internal temperature of the flask was elevated to 70°C and the atmosphere was sufficiently substituted with nitrogen. Then, 10 % of the prepared emulsified monomer was charged and each aqueous solution prepared by dissolving each of 1.44 g of ammonium persulfate and 0.58 g of sodium hydrogen sulfite in 10 g of deionized water was added, followed by the reaction for 1 hour and further successive addition of the remaining emulsified monomer over 3.5 hours. The polymerization was carried out at 70°C for 9 hours after the addition of a catalyst and the reaction mixture was neutralized with diluted aqueous ammonia. The resulting emulsion had a solid content of 40 %, a polymerization degree of 92.0 % for DAP and 100 % for EA, an average particle diameter of 0.139 $\mu$m, and an acid value of 9.0 mg-KOH/g-solid (calculated value: 7.7).

Reference Example 5

The following materials were charged in a 1 liter separable flask equipped with a stirrer, a thermometer, a condenser, a gas introducing port and a sampling port to prepare an aqueous emulsifier solution.

| Sodium dodecylbenzenesulfonate | 7.2 g |
|--------------------------------|-------|
| Deionized water | 430 g |

Separately, a monomer mixture having the following composition was prepared.

| DAP | 90 g (25 % monomer) |
|-----|---------------------|
| EA | 261 g (72.5 % monomer) |
| AA | 9 g (2.5 % monomer) |

The internal temperature of the flask was elevated to 80°C and the atmosphere was sufficiently substituted with nitrogen under stirring at 300 rpm using a semicircular stirring blade. Then, 10 % of the prepared monomer mixture was charged and an aqueous solution prepared by dissolving 0.54 g of ammonium persulfate in 10 g of deionized water was added, followed by the reaction for 1 hour and further successive addition of the remaining 90 % monomer over about 3 hours. The polymerization was carried out at 80°C for 9 hours after the addition of a catalyst and the reaction mixture was neutralized with diluted aqueous ammonia. The resulting emulsion had a solid content of 45 %, a polymerization degree of 97.0 % for DAP and 100 % for EA, an average particle diameter of 0.127 $\mu$m, and an acid value of 20.8 mg-KOH/g-solid (calculated value: 19.0).

Reference Example 6

The following materials were charged in a 1 liter separable flask equipped with a stirrer, a thermometer, a condenser, a gas introducing port and a sampling port to prepare an aqueous emulsifier solution.

| Sodium dodecylbenzenesulfonate | 7.2 g |
|--------------------------------|-------|
| Deionized water | 430 g |

Separately, a monomer mixture having the following composition was prepared.

| DAP | 90 g (25 % monomer) |
|---|---|
| EA | 248 g (69% monomer) |
| AA | 3.6 g (1% monomer) |
| Methyl methacrylate (MMA) | 18 g (5 % monomer) |

The internal temperature of the flask was elevated to 80°C and the atmosphere was sufficiently substituted with nitrogen under stirring at 300 rpm using a semicircular stirring blade. Then, 10 % of the prepared monomer mixture was charged and an aqueous solution prepared by dissolving 0.54 g of ammonium persulfate in 10 g of deionized water was added, followed by the reaction for 1 hour and further successive addition of the remaining 90 % monomer over about 3 hours. The polymerization was carried out at 80°C for 9 hours after the addition of a catalyst and the reaction mixture was neutralized with diluted aqueous ammonia. The resulting emulsion had a solid content of 45 %, a polymerization degree of 95.5 % for DAP and 100 % for EA, and an average particle diameter of 0.117 μm.

Reference Example 7

The following materials were charged in a 1 liter separable flask equipped with a stirrer, a thermometer, a condenser, a gas introducing port and a sampling port to prepare an aqueous emulsifier solution.

| Sodium dialkylsulfosuccinate (Samolin OT-70 manufactured by Sanyo Chemical Industries, Ltd.) | 2.2 g |
|---|---|
| Deionized water | 250 g |

Separately, an emulsified monomer having the following composition was prepared.

| DAP | 90 g (25 % monomer) |
|---|---|
| EA | 261 g (72.5 % monomer) |
| 2-Hydoxyethyl methacrylate (HEMA) | 9 g (2.5 % monomer) |
| Sodium dialkylsulfosuccinate | 5.0 g |
| Deionized water | 180 g |

The internal temperature of the flask was elevated to 80°C and the atmosphere was sufficiently substituted with nitrogen under stirring at 300 rpm using a semicircular stirring blade. Then, 10 % of the prepared emulsified monomer was charged and an aqueous solution prepared by dissolving 1.26 g of ammonium persulfate in 10 g of deionized water was added, followed by the reaction for 1 hour and further successive addition of the remaining emulsified monomer over about 4 hours. The polymerization was carried out at 70°C for 9 hours after the addition of a catalyst and the reaction mixture was neutralized with diluted aqueous ammonia. The resulting emulsion had a solid content of 45 %, a polymerization degree of 94.4 % for DAP and 100 % for EA, and an average particle diameter of 0.123 μm.

Reference Example 8

The following materials were charged in a 1 liter separable flask equipped with a stirrer, a thermometer, a condenser, a gas introducing port and a sampling port to prepare an aqueous emulsifier solution.

| Sodium dodecylbenzenesulfonate | 1.9 g |
|---|---|
| Deionized water | 310 g |

Separately, an emulsified monomer having the following composition was prepared.

| DAP | 128 g (40 % monomer) |
|---|---|
| EA | 189 g (59 % monomer) |
| AA | 3.2 g (1.0% monomer) |
| Sodium dodecylbenzenesulfonate | 4.5 g |
| Deionized water | 160 g |

The internal temperature of the flask was elevated to 70°C and the atmosphere was sufficiently substituted with nitrogen under stirring at 300 rpm using a semicircular stirring blade. Then, 10 % of the emulsified monomer was charged and an aqueous solution prepared by dissolving 1.12 g of ammonium persulfate in 10 g of deionized water was added, followed by the reaction for 1 hour and further successive addition of the remaining emulsified monomer over 4 hours. The polymerization was carried out at 70°C for 9 hours after the addition of a catalyst and the reaction mixture was neutralized with diluted aqueous ammonia. The resulting emulsion had a solid content of 40 %, a polymerization degree of 93.4 % for DAP and 100 % for EA, and an average particle diameter of 0.097 μm.

Reference Example 9

The following materials were charged in a 1 liter separable flask equipped with a stirrer, a thermometer, a condenser, a gas introducing port and a sampling port to prepare an aqueous emulsifier solution.

| Sodium dodecylbenzenesulfonate | 1.9 g |
|---|---|
| Deionized water | 392 g |

Separately, an emulsified monomer having the following composition was prepared.

| DAP | 144 g (60 % monomer) |
|---|---|
| EA | 94 g (39 % monomer) |
| AA | 2.4 g (1.0 % monomer) |
| Sodium dodecylbenzenesulfonate | 4.4 g |
| Deionized water | 168 g |

The internal temperature of the flask was elevated to 70°C and the atmosphere was sufficiently substituted with nitrogen under stirring at 300 rpm using a semicircular stirring blade. Then, 10 % of the emulsified monomer was charged and an aqueous solution prepared by dissolving 1.12 g of ammonium persulfate in 10 g of deionized water was added, followed by the reaction for 1 hour and further successive addition of the remaining emulsified monomer over 4 hours. The polymerization was carried out at 70°C for 9 hours after the addition of a catalyst and the reaction mixture was neutralized with diluted aqueous ammonia. The resulting emulsion had a solid content of 30 %, a polymerization degree of 91.0 % for DAP and 100 % for EA, and an average particle diameter of 0.078 μm.

Reference Example 10

The following materials were charged in a 1 liter separable flask equipped with a stirrer, a thermometer, a condenser, a gas introducing port and a sampling port to prepare an aqueous emulsifier solution.

| | |
|---|---|
| Sodium dodecylbenzenesulfonate | 7.2 g |
| Deionized water | 430 g |

Separately, a monomer mixture having the following composition was prepared.

| | |
|---|---|
| DAP | 7.2 g (2 % monomer) |
| EA | 347.4 g (96.5 % monomer) |
| AA | 5.4 g (1.5 % monomer) |

The internal temperature of the flask was elevated to 80°C and the atmosphere was sufficiently substituted with nitrogen under stirring at 300 rpm using a semicircular stirring blade. Then, 10 % of the prepared monomer mixture was charged and an aqueous solution prepared by dissolving 0.54 g of ammonium persulfate in 10 g of deionized water was added, followed by the reaction for 1 hour and further successive addition of the remaining monomer mixture over about 3 hours. The polymerization was carried out at 80°C for 9 hours after the addition of a catalyst and the reaction mixture was neutralized with diluted aqueous ammonia. The resulting emulsion had a solid content of 45 %, a polymerization degree of 98.2 % for DAP and 100 % for EA, and an average particle diameter of 0.099 μm.

Production of dried powder

The dried powder was produced from the diallyl emulsions obtained in Reference Examples 1 to 10 by a spray drier (Model R-3, manufactured by Sakamoto Giken Co., Ltd.). The resulting powder was white spherical powder having an average particle diameter of 20 to 40 μm, a bulk specific gravity of 0.5 to 0.7 and a water content of smaller than 2 %.
In the case of Reference Examples 1 and 2, an operation of impregnating a kraft paper with the resulting emulsion and drying the paper (40°C) was repeated five times to obtain samples for measurement of dynamic viscoelasticity. The dynamic viscoelasticity was measured by using a viscoelastic spectrometer, Model VES-F-III manufactured by Iwamoto Seisakusho Co., Ltd. The glass transition temperature (Tg) was determined from a fractional peak of tan δ. The results were 20.4 and 24.0°C, respectively.

Examples 1 to 14 and Comparative Examples 1 to 3

The dried powder obtained above was added to an epoxy resin DGEBF (EPICLON 830LVP (epoxy equivalent: 161), manufactured by Dainippon Ink & Chemicals, Inc.) and DGEBA (Epikote 828 (epoxy equivalent: 190), manufactured by Yuka Shell Co., Ltd.) in the amounts shown in Table II, and then dispersed by an ultrasonic irradiator (Model NS600-20H, manufactured by Nippon Seiki Seisakusho Co.) with stirring sometimes for 1 to 10 hours.
This nano-dispersed resin was heated to 120°C in an oil bath to sufficiently reduce the viscosity, and then deaerated in a vacuum oven (set at 110°C).
After the temperature was lowered to room temperature, a curing agent TEGA (triethylene glycol diamine (amine equivalent: 37), manufactured by TXEACO JAPAN Co., Ltd.) was added in the same equivalent as that of an epoxy group of the epoxy resin and the mixture was cast into a silicone mold. After allowing to stand in an oven at 50°C overnight (17 hours), the mixture was post-cured at 80°C for 1 hour, 100°C for 1 hour, then at 130°C for 1 hour.
The cured material was ground into a predetermined size, conditioned (temperature: 23°C, relative humidity: 50 %) and then subjected to physical property tests (a flexural test, a measurement of dynamic viscoelasticity, a fracture toughness test and a Sharpy impact test).
The physical property tests were conducted in the following procedure.

Flexural test

The flexural test was conducted by an autograph DSS-5000 manufactured by Shimadzu Corp. in accordance with JIS K6911 (crosshead speed: 3 mm/min.).

The flexural modulus was calculated by the following equation.

$$Ef= [L_v{}^3/(4Wh^3)] \cdot F/Y$$

wherein

Ef: flexural modulus (MPa) {kgf/mm$^2$}
$L_v$: distance between the supports (mm)
W: width of test piece (mm)
h: height of test piece (mm)
F/Y: gradient of the linear part of load-deflection curve (N/mm) {kgf/mm}

The flexural strength was calculated by the following equation.

$$\sigma = (3PL_v)/(2Wh^2)$$

wherein

σ: flexural strength (MPa) {kgf/mm$^2$}
P: load at break of test piece (N) {kgf}
$L_v$: distance between the supports (mm)
W: width of test piece (mm)
h: height of test piece (mm)

Dynamic viscoelasticity test

In the dynamic viscoelasticity test, a temperature fluctuation was measured at a temperature raise rate of 2°C/min. by using DMSIIO manufactured by SEIKO Co., Ltd. and a peak temperature of tan δ was taken as a glass transition temperature (Tg).

Fracture toughness test

The fracture toughness was determined from plane strain fracture toughness KIC obtained by fracturing a test piece under a three-point bending load in accordance with ASTM D 5045-91. The equipment used herein was an autograph DSS-5000 manufactured by Shimadzu Corp. (crosshead speed: 1 mm/min, distance between the supports: 48 mm).

Sharpy impact test

In the Sharpy impact test, IMPACT TESTING MACHINE manufactured by Shimadzu Corp. was used.
The composition of diallyl emulsion, polymerization degree and particle diameter are shown in Table I (Reference Examples 1 to 10).
The formulation of cured material and various physical properties are shown in Table II and Table III (Examples 1 to 14) as well as Table IV (Comparative Examples 1 to 3).

Table I

| | Reference Example No. | | | | | | | | | |
|---|---|---|---|---|---|---|---|---|---|---|
| | 1 | 2 | 3 | 4 | 5 | 6 | 7 | 8 | 9 | 10 |
| Composition of emulsion (% by weight) | | | | | | | | | | |
| DAP | - | 15 | 20 | 25 | 25 | 25 | 25 | 40 | 60 | 2 |
| DAT | 10 | - | - | - | - | - | - | - | - | - |
| EA | - | 82.5 | 77.5 | 74 | 72.5 | 69 | 72.5 | 59 | 39 | 96.5 |
| BA | 88.5 | - | - | - | - | - | - | - | - | - |
| AA | 1.5 | 2.5 | 2.5 | 1 | 2.5 | 1 | - | 1 | 1 | 1.5 |
| HEMA | - | - | - | - | - | - | 2.5 | - | - | - |
| MMA | - | - | - | - | - | 5 | - | - | - | - |
| Properties of crosslinked copolymer | | | | | | | | | | |
| Solid content (%) | 45 | 30 | 40 | 40 | 45 | 45 | 45 | 40 | 30 | 45 |
| DAP (DAT) polymerization degree (%) | 89.2 | 94.2 | 98.6 | 92.0 | 97.0 | 95.5 | 94.4 | 93.4 | 91.0 | 98.2 |
| Particle diameter ($\mu$m) | 0.125 | 0.102 | 0.113 | 0.139 | 0.127 | 0.117 | 0.123 | 0.097 | 0.078 | 0.099 |

Table II

| | Example No. | | | | | | |
|---|---|---|---|---|---|---|---|
| | 1 | 2 | 3 | 4 | 5 | 6 | 7 |
| Reference Example No. | 1 | 2 | 3 | 4 | 4 | 4 | 4 |
| DAP | - | 15 | 20 | 25 | 25 | 25 | 25 |
| DAT | 10 | - | - | - | - | - | - |
| EA | - | 82.5 | 77.5 | 74 | 74 | 74 | 74 |
| BA | 88.5 | - | - | - | - | - | - |
| AA | 1.5 | 2.5 | 2.5 | 1 | 1 | 1 | 1 |
| HEMA | - | - | - | - | - | - | - |
| MMA | - | - | - | - | - | - | - |
| Formulation (parts by weight) | | | | | | | |
| Epoxy | | | | | | | |
| DGEBF | 100 | 100 | 100 | 100 | 100 | 100 | 100 |
| DGEBA | - | - | - | - | - | - | - |
| Powder of Reference Example | 10 | 10 | 10 | 5 | 10 | 20 | 30 |
| Curing agent | | | | | | | |
| TEGA | 23 | 23 | 23 | 23 | 23 | 23 | 23 |
| | Example No. | | | | | | |
| | 8 | 9 | 10 | 11 | 12 | 13 | 14 |
| Reference Example No. | 5 | 4 | 4 | 6 | 7 | 8 | 9 |
| DAP | 25 | 25 | 25 | 25 | 25 | 40 | 60 |
| DAT | - | - | - | - | - | - | - |
| EA | 72.5 | 74 | 74 | 69 | 72.5 | 59 | 39 |
| BA | - | - | - | - | - | - | - |
| AA | 2.5 | 1 | 1 | 1 | - | 1 | 1 |
| HEMA | - | - | - | - | 2.5 | - | - |
| MMA | - | - | - | 5 | - | - | - |
| Formulation (parts by weight) | | | | | | | |
| Epoxy | | | | | | | |
| DGEBF | 100 | - | - | 100 | 100 | 100 | 100 |
| DGEBA | - | 100 | 100 | - | - | - | - |
| Powder of Reference Example | 10 | 10 | 20 | 10 | 10 | 10 | 10 |
| Curing agent | | | | | | | |
| TEGA | 23 | 19.5 | 19.5 | 23 | 23 | 23 | 23 |

Table III

| | Example No. | | | | | | |
|---|---|---|---|---|---|---|---|
| | 1 | 2 | 3 | 4 | 5 | 6 | 7 |
| Curing physical properties | | | | | | | |
| Flexural modulus (kgf/mm$^2$) | 275 | 277 | 280 | 306 | 280 | 279 | 275 |
| Flexural strength (kgf/mm$^2$) | 9.0 | 9.0 | 9.2 | 9.5 | 9.3 | 9.1 | 9.3 |
| Glass transition temperature (°C) | 70 | 73 | 75 | 77 | 78 | 82 | 83 |
| Fracture toughness (MPa · m$^{1/2}$) | 2.8 | 2.8 | 2.8 | 3.1 | 3.0 | 3.0 | 2.9 |
| Sharpy impact value (kgf-cm/cm) | 11.4 | 11.0 | 10.5 | 9.4 | 11.2 | 10.0 | 10.3 |
| | Example No. | | | | | | |
| | 8 | 9 | 10 | 11 | 12 | 13 | 14 |
| Curing physical properties | | | | | | | |
| Flexural modulus (kgf/mm$^2$) | 280 | 248 | 250 | 285 | 280 | 300 | 305 |
| Flexural strength (kgf/mm$^2$) | 9.5 | 8.8 | 9.0 | 9.2 | 9.6 | 9.4 | 9.7 |
| Glass transition temperature (°C) | 77 | 95 | 96 | 80 | 75 | 80 | 82 |
| Fracture toughness (MPa · m$^{1/2}$) | 3.0 | 2.3 | 2.5 | 2.7 | 2.9 | 2.9 | 2.8 |
| Sharpy impact value (kgf-cm/cm) | 11.0 | 10.4 | 10.2 | 9.7 | 10.8 | 10.0 | 9.8 |

Table IV

| | Comparative Example No. | | |
|---|---|---|---|
| | 1 | 2 | 3 |
| Reference Example No. | | | 10 |
| DAP | - | - | 2 |
| EA | - | - | 96.5 |
| AA | - | - | 1.5 |
| Formulation (parts by weight) | | | |
| Epoxy | | | |
| DGEBF | 100 | - | 100 |
| DGEBA | - | 100 | - |
| Fine particles | - | - | 10 |
| Curing agent | | | |
| TEGA | 23 | 23 | 23 |
| Curing physical properties | | | |
| Flexural modulus (kgf/mm$^2$) | 310 | 260 | 230 |
| Flexural strength (kgf/mm$^2$) | 10.8 | 9.4 | 7.3 |
| Glass transition temperature (°C) | 73 | 96 | 68 |
| Fracture toughness (MPa $\cdot$ m$^{1/2}$) | 0.75 | 1.1 | 1.4 |
| Sharpy impact value (kgf-cm/cm) | 8.6 | 6.1 | 11.2 |

(Note)
DAP: Diallyl phthalate
DAT: Diallyl terephthalate
EA: Ethyl acrylate
BA: Butyl acrylate
AA: Acrylic acid
HEMA: 2-Hydroxyethyl methacrylate
MMA: Methyl methacrylate
DGEBF: Epoxy resin manufactured by Dainippon Ink & Chemicals, Inc.
DGEBA: Epoxy resin manufactured by Yuka Shell Co., Ltd.
TEFA: Triethylene glycol diamine

EFFECT OF THE INVENTION

The cured material of the epoxy resin composition of the present invention can have high toughness such as fracture toughness and impact resistance without impairing excellent characteristics such as mechanical strength of the epoxy resin. Therefore, it can be used as adhesives, coating agents, sealing agents and molded materials.

**Claims**

1.   An epoxy resin composition comprising:

      (1) 100 parts by weight of an epoxy resin; and

(2) 1 to 300 parts by weight of crosslinked copolymer fine particles comprising

   (a) 10 to 90 % by weight of di(meth)allyl phthalate, and
   (b) 10 to 90 % by weight of a vinyl compound other than di(meth)allyl phthalate.

2. The epoxy resin composition according to claim 1, wherein the di(meth)allyl phthalate (a) is at least one monomer selected from diallyl ortho-phthalate, diallyl isophthalate, diallyl terephthalate, dimethallyl ortho-phthalate, dimethallyl isophthalate and dimethallyl terephthalate.

3. The epoxy resin composition according to claim 1, wherein the vinyl compound (b) is (b-1) a compound containing a functional group having reactivity with an epoxy group or (b-2) a compound containing no functional group having reactivity with an epoxy group.

4. The epoxy resin composition according to claim 3, wherein the functional group having reactivity with the epoxy group in the compound (b-1) containing the functional group having reactivity with the epoxy group is at least one group selected from an acid group, an acid anhydride group, a group of salt of acid, a hydroxyl group, an epoxy group and an amino group.

5. The epoxy resin composition according to claim 3, wherein the compound (b-2) containing no functional group having reactivity with the epoxy group is a (meth)acrylate ester of alcohol having 1 to 8 carbon atoms.

6. The epoxy resin composition according to any one of claims 1 to 5, further comprising an organic solvent.

7. The epoxy resin composition according to any one of claims 1 to 6, wherein the crosslinked copolymer fine particles (2) are produced by the emulsion polymerization reaction and are obtained by separating the reaction product containing an aqueous medium from water.

# INTERNATIONAL SEARCH REPORT

| International application No. |
|---|
| PCT/JP98/02019 |

**A. CLASSIFICATION OF SUBJECT MATTER**
    Int.Cl⁶ C08L63/00, C08L31/08, C08F2/22

According to International Patent Classification (IPC) or to both national classification and IPC

**B. FIELDS SEARCHED**

Minimum documentation searched (classification system followed by classification symbols)
    Int.Cl⁶ C08L63/00-63/10, C08L31/08, C08F2/22

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 61-272228, A (Teruo Tatekawa), December 2, 1986 (02. 12. 86), Claims (Family: none) | 1-7 |
| A | JP, 63-199707, A (Osaka Soda Co., Ltd.), August 18, 1988 (18. 08. 88), Claims (Family: none) | 1-7 |
| A | JP, 8-157532, A (Daiso Co., Ltd.), June 18, 1996 (18. 06. 96), Claims ; Par. Nos. [0001], [0026] (Family: none) | 1-7 |
| A | JP, 8-12854, A (Hitachi Cable, Ltd.), January 16, 1996 (16. 01. 96), Claims (Family: none) | 1-7 |
| A | JP, 8-27360, A (Mitsubishi Rayon Co., Ltd.), January 30, 1996 (30. 01. 96), Claims (Family: none) | 1-7 |

| ☐ Further documents are listed in the continuation of Box C. | ☐ See patent family annex. |
|---|---|

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| July 8, 1998 (08. 07. 98) | July 21, 1998 (21. 07. 98) |

| Name and mailing address of the ISA/ Japanese Patent Office | Authorized officer |
|---|---|
| Facsimile No. | Telephone No. |

Form PCT/ISA/210 (second sheet) (July 1992)